# EUROPEAN PATENT SPECIFICATION

(11) **EP 3 719 953 B1**
(45) Date of publication and mention of the grant of the patent: **04.11.2026**
(21) Application number: 19195824.8
(22) Date of filing: 06.09.2019
(51) Int. Cl.: H02J 7/00, A24F 15/18

(54) **POWER BANK FOR ELECTRONIC CIGARETTE**
POWERBANK FÜR ELEKTRONISCHE ZIGARETTE
CHARGEUR POUR CIGARETTE ÉLECTRONIQUE

(30) Priority: 02.04.2019 CN 201910262695; 02.04.2019 CN 201920441645 U
(43) Date of publication of application: 07.10.2020
(73) Proprietor: Liu, Tuanfang, 518000 Shenzhen, Guangdong (CN)
(72) Inventor: Liu, Tuanfang, 518000 Shenzhen, Guangdong (CN)
(74) Representative: Scholl, Matthias

(56) References cited:
- EP-A1- 3 278 679

## Description

This disclosure relates to a power bank for an electronic cigarette.

Electronic cigarettes atomize nicotine-containing e-liquid. The electronic cigarettes include embedded rechargeable batteries. The rechargeable batteries can be recharged using power banks. EP3278679 A1 describes an example of a known electronic cigarette and its power bank.

Provided is a power bank for an electronic cigarette, according to claim 1. The power bank comprises a face shell; a back shell; a first panel; a second panel; an on-off button; a power adjustment button; a thread ring; a seal ring; a first electrode; a spring; an insulator; a sleeve piece; a second electrode; a silica seal; a battery cell; a control board; a silicone pad; a fixed ring; a display screen; and a light guide film.

The face shell and the back shell are combined to form a cylinder comprising a first end and a second end; the face shell comprises a front face and a back face, and the first panel and the second panel are attached to the front face and the back face, respectively; the first panel comprises a first groove and a second groove, and the on-off button and the power adjustment button are disposed in the first groove and the second groove, respectively; the positive and negative terminals of the control board are connected to positive and negative terminals of the battery cell; and the control board and the battery cell are disposed in the cylinder formed by the face shell and the back shell; the spring is sheathed on the first electrode; the first electrode is disposed on the insulator; the second electrode is directly connected to the first electrode; the silica seal is sheathed on the second electrode and is disposed in the sleeve piece; the thread ring is disposed on the first end of the cylinder formed by the face shell and the back shell; the seal ring is embedded in the thread ring; the sleeve piece abuts against the thread ring; and the silicone pad is disposed on the second end of the cylinder; the fixed ring is sheathed on the silicone pad; the display screen is disposed on the silicone pad; and the light guide film is attached to the display screen.

The power adjustment button comprises six tap positions corresponding to different output powers.

Advantages of the power bank according to embodiments of the disclosure are summarized as follows. The power bank is cylindrical and compact, so it is easy to carry. The power bank comprises a power adjustment button. Continuous pressing the power adjustment button can adjust the output power of the power bank.
FIG. 1 is an exploded view of a power bank for an electronic cigarette according to one embodiment of the disclosure;
FIG. 2 is a stereogram of a power bank for an electronic cigarette according to one embodiment of the disclosure; and
FIG. 3 is a sectional view of a power bank for an electronic cigarette according to one embodiment of the disclosure.

To further illustrate, embodiments detailing a power bank for an electronic cigarette are described below. It should be noted that the following embodiments are intended to describe and not to limit the disclosure.

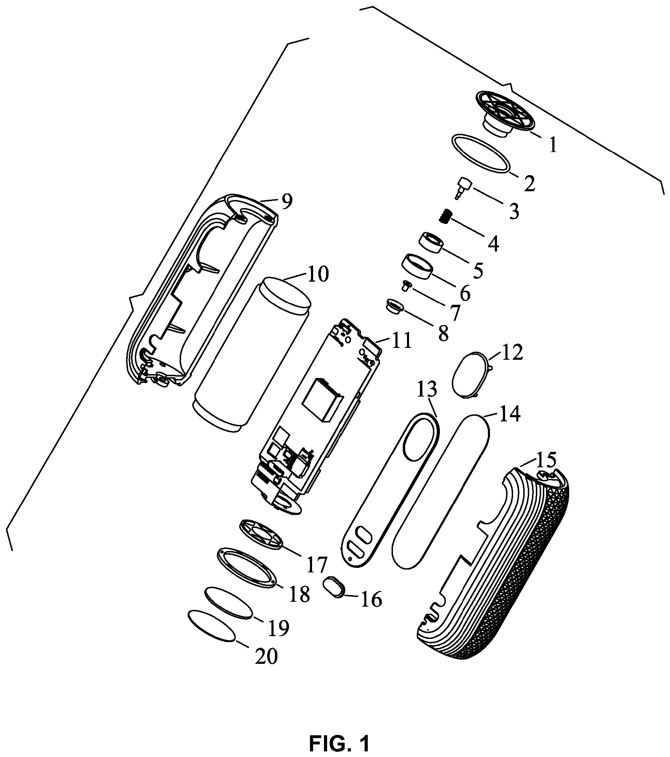

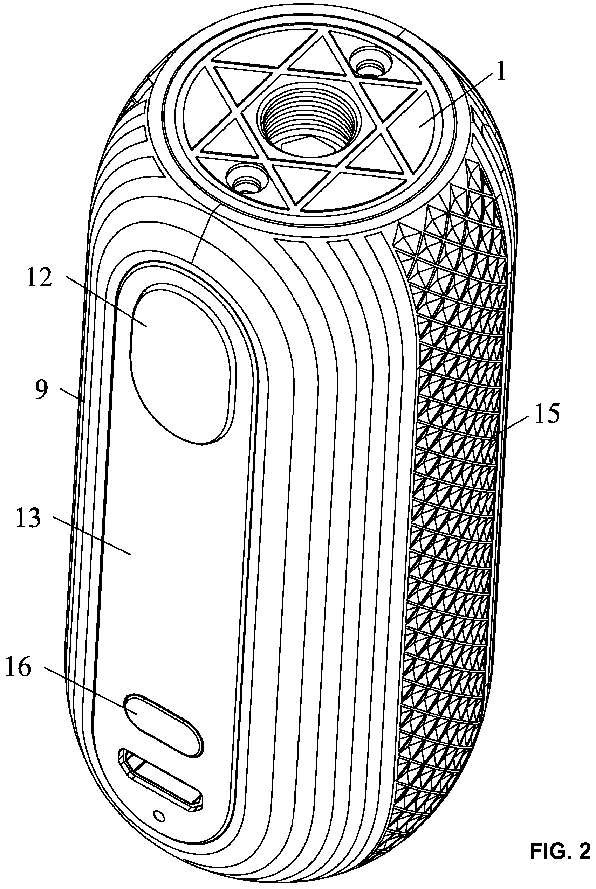

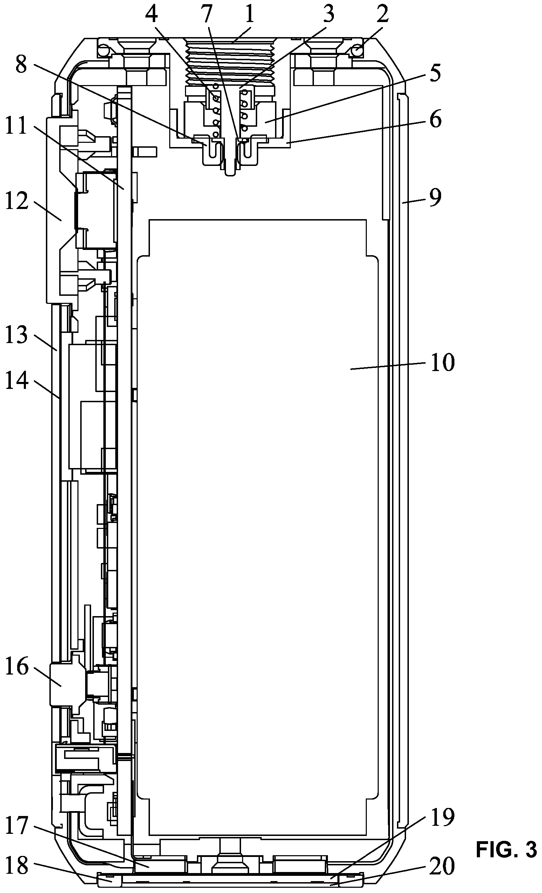

As shown in FIGS. 1-3, provided is a power bank for an electronic cigarette, comprising: a face shell 9; a back shell 15; a first panel 13; a second panel 14; an on-off button 12; a power adjustment button 16; a thread ring 1; a seal ring 2; a first electrode 3; a spring 4; an insulator 5; a sleeve piece 6; a second electrode 7; a silica seal 8; a battery cell 10; a control board 11; a silicone pad 17; a fixed ring 18; a display screen 19; and a light guide film 20.

The face shell 9 and the back shell 15 are combined to form a cylinder comprising a first end and a second end; the face shell 9 comprises a front face and a back face, and the first panel 13 and the second panel 14 are attached to the front face and the back face, respectively; the first panel 13 comprises a first groove and a second groove, and the on-off button 12 and the power adjustment button 16 are disposed in the first groove and the second groove, respectively; the positive and negative terminals of the control board 11 are connected to positive and negative terminals of the battery cell 10; and the control board 11 and the battery cell 10 are disposed in the cylinder formed by the face shell 9 and the back shell 15; the spring 4 is sheathed on the first electrode 3; the first electrode 3 is disposed on the insulator 5; the second electrode 7 is directly connected to the first electrode 3; the silica seal 8 is sheathed on the second electrode 7 and is disposed in the sleeve piece 6; the thread ring 1 is disposed on the first end of the cylinder formed by the face shell 9 and the back shell 15; the seal ring 2 is embedded in the thread ring 1; the sleeve piece 6 abuts against the thread ring 1; and the silicone pad 17 is disposed on the second end of the cylinder; the fixed ring 18 is sheathed on the silicone pad 17; the display screen 19 is disposed on the silicone pad 17; and the light guide film 20 is attached to the display screen 19.

The power adjustment button 16 comprises six tap positions, so as to adjust the power bank to output different power to the electronic cigarette.

The power bank is cylindrical and compact, so it is easy to carry. The power adjustment button 16 comprises six tap positions. Continuous pressing the power adjustment button can adjust the output power of the power bank. For example, continuously press the power adjustment button six times, the power bank can output a maximum voltage. The output voltage periodically changes in six values as per the press times of the power adjustment button.

It will be obvious to those skilled in the art that changes and modifications may be made, within the scope of the appended claims.

## Claims

1. A power bank, comprising:
a face shell (9);
a back shell (15);
a first panel (13);
a second panel (14);
an on-off button (12);
a power adjustment button (16);
a battery cell (10);
a control board (11);
a silicone pad (17);
a fixed ring (18); and
a display screen (19);
**characterized in that:**
the face shell (9) and the back shell (15) are combined to form a cylinder comprising a first end and a second end;
the face shell (9) comprises a front face and a back face, and the first panel (13) and the second panel (14) are attached to the front face and the back face, respectively;
the first panel (13) comprises a first groove and a second groove, and the on-off button (12) and the power adjustment button (16) are disposed in the first groove and the second groove, respectively; the power adjustment button (16) comprises six tap positions for respectively activating the power bank to output six powers;
positive and negative terminals of the control board (11) are connected to positive and negative terminals of the battery cell (10); and the control board (11) and the battery cell (10) are disposed in the cylinder formed by the face shell (9) and the back shell (15);
the silicone pad (17) is disposed on the second end of the cylinder; the fixed ring (18) is sheathed on the silicone pad (17); and the display screen (19) is disposed on the silicone pad (17).

2. The power bank of claim 1, **characterized in that** the six tap positions are adjusted by pressing the power adjustment button (16).

## Patentansprüche

1. Powerbank, umfassend:
eine Flächenschale (9);
eine Rückschale (15);
eine erste Platte (13);
eine zweite Platte (14);
eine Ein-Aus-Taste (12);
eine Leistungseinstelltaste (16);
eine Batteriezelle (10);
eine Steuerplatine (11);
ein Siliconkissen (17);
einen feststehenden Ring (18); und
einen Anzeigebildschirm (19);
**dadurch gekennzeichnet, dass:**
die Flächenschale (9) und die Rückschale (15) kombiniert sind, um einen Zylinder auszubilden, der ein erstes Ende und ein zweites Ende umfasst;
die Flächenschale (9) eine Stirnfläche und eine Rückfläche umfasst und die erste Platte (13) und die zweite Platte (14) an der Stirnfläche bzw. der Rückfläche angebracht sind;
die erste Platte (13) eine erste Nut und eine zweite Nut umfasst und die Ein-Aus-Taste (12) und die Leistungseinstelltaste (16) in der ersten Nut bzw. der zweiten Nut angeordnet sind; die Leistungseinstelltaste (16) sechs Tipppositionen zum jeweiligen Aktivieren der Powerbank umfasst, um sechs Leistungen auszugeben;
positive und negative Anschlüsse der Steuerplatine (11) positiven und negativen Anschlüssen der Batteriezelle (10) verbunden sind; und die Steuerplatine (11) und die Batteriezelle (10) in dem Zylinder angeordnet sind, der durch die Flächenschale (9) und die Rückschale (15) ausgebildet ist;
das Siliconkissen (17) auf dem zweiten Ende des Zylinders angeordnet ist; der feststehende Ring (18) auf dem Siliconkissen (17) ummantelt ist; und der Anzeigebildschirm (19) auf dem Siliconkissen (17) angeordnet ist.

2. Powerbank nach Anspruch 1, **dadurch gekennzeichnet, dass** die sechs Tipppositionen durch Drücken der Leistungseinstelltaste (16) eingestellt werden.

## Revendications

1. Chargeur portatif, comprenant :
une coque avant (9) ;
une coque arrière (15) ;
un premier panneau (13) ;
un second panneau (14) ;
un bouton marche-arrêt (12) ;
un bouton de réglage de puissance (16) ;
un élément de batterie (10) ;
une carte de commande (11) ;
un tampon en silicone (17) ;
une bague fixe (18) ; et
un écran d'affichage (19) ;
**caractérisé en ce que :**
la coque avant (9) et la coque arrière (15) sont combinées pour former un cylindre comprenant une première extrémité et une seconde extrémité ;
la coque avant (9) comprend une face avant et une face arrière, et le premier panneau (13) et le second panneau (14) sont fixés respectivement à la face avant et à la face arrière ;
le premier panneau (13) comprend une première rainure et une seconde rainure, et le bouton marche-arrêt (12) et le bouton de réglage de puissance (16) sont disposés respectivement dans la première rainure et la seconde rainure ; le bouton de réglage de puissance (16) comprend six positions de prise permettant d'activer respectivement le chargeur portatif pour délivrer en sortie six puissances ;
des bornes positive et négative de la carte de commande (11) sont connectées à des bornes positive et négative de l'élément de batterie (10) ; et la carte de commande (11) et l'élément de batterie (10) sont disposés dans le cylindre formé par la coque avant (9) et la coque arrière (15) ;
le tampon en silicone (17) est disposé sur la seconde extrémité du cylindre ; la bague fixe (18) est montée sur le tampon en silicone (17) ; et l'écran d'affichage (19) est disposé sur le tampon en silicone (17).

2. Chargeur portatif de la revendication 1, **caractérisé en ce que** les six positions de prise sont réglées en appuyant sur le bouton de réglage de puissance (16).
